# EUROPÄISCHE PATENTSCHRIFT

(11) **EP 1 117 935 B1**
(45) Veröffentlichungstag und Bekanntmachung des Hinweises auf die Patenterteilung: **21.05.2003**
(21) Anmeldenummer: 99970154.3
(22) Anmeldetag: 22.09.1999
(51) Int. Cl.: F04D 29/70, F16K 51/00, F16K 27/07

(54) **ASEPTISCHES PUMPENGEHÄUSE MIT SCHALTBARER DRAINAGE**
ASEPTIC PUMP HOUSING WITH SWITCHABLE DRAINAGE
CARTER DE POMPE ASEPTIQUE A DRAINAGE COMMUTABLE

(30) Priorität: 01.10.1998 DE 19845308; 14.07.1999 DE 19932859
(43) Veröffentlichungstag der Anmeldung: 25.07.2001
(73) Patentinhaber: TUCHENHAGEN GmbH, 21514 Büchen (DE)
(72) Erfinder: STAHLKOPF, Ralf, D-21514 Büchen (DE)
(74) Vertreter: Patentanwälte Hauck, Graalfs, Wehnert, Döring, Siemons, Schildberg
(86) Internationale Anmeldenummer: EP9907048
(87) Internationale Veröffentlichungsnummer: WO00020764

(56) Entgegenhaltungen:
- EP-A- 0 651 160
- DE-B- 1 073 311
- DE-C- 710 209
- GB-A- 806 485
- US-A- 2 372 538
- US-A- 4 836 236
- US-A- 5 685 692

## Beschreibung

Die Erfindung betrifft ein aseptisches Pumpengehäuse mit schaltbarer Drainage, insbesondere für ein Laufrad- oder Spiralgehäuse oder ein einen schaufelfreien Ringraum bildendes Gehäuse einer Kreiselpumpe für die Förderung von Flüssigkeiten unter aseptischen oder wenigstens sanitär einwandfreien Bedingungen, das, bezogen auf die Einbaulage des Pumpengehäuses, im Bereich seiner tiefsten Stelle eine Drainageöffnung aufweist, die in einer in die Umgebung des Pumpengehäuses geführten Ablaufleitung ihre Fortsetzung findet.

In Bereichen der Chemie und Pharmazie, in denen Flüssigkeiten unter aseptischen oder wenigstens sanitären Bedingungen gefördert werden müssen, wird an die Fördereinrichtung dieser Flüssigkeiten u.a. beispielsweise die Anforderung gestellt, daß das Pumpengehäuse im Anschluß an eine Durchlaufreinigung (CIP-Reinigung (cleaning in place)) dem nachfolgenden Produktionsprozeß rückstandsfrei zur Verfügung steht. Diese Rückstandsfreiheit bedeutet, daß beispielsweise auch Reinigungsflüssigkeit wie Wasser oder Desinfektionsmittel mit dem Ende der Reinigungsprozedur restlos aus dem Pumpengehäuse entfernt wird.

In den Richtlinien der EHEDG (European Hygienic Equipment Design Group), die in der Druckschrift "Trends in Food Science & Technology, November 1992 bis März 1997, abgedruckt sind, werden Vorschläge für eine Drainierbarkeit von Pumpengehäusen und zur Vermeidung von Toträumen in Pumpengehäusen gemacht. Dort wird beispielsweise vorgeschlagen, bei waagerecht angeordneter Pumpenwelle den in der Regel, bezogen auf die Einbaulage, nach oben gerichteten Druckstutzen des Pumpengehäuses an dessen Unterseite in tangentialer Richtung anzubringen bzw. das Pumpengehäuse derart zu verdrehen, daß der Druckstutzen eine diesbezügliche Lage einnimmt, so daß sich das Pumpengehäuse selbsttätig entleeren kann. Falls es sich in diesem Zusammenhang um eine Kreiselpumpe handelt, wird durch eine derartige Anordnung allerdings ein neues Problem geschaffen, das darin besteht, daß sich das Pumpengehäuse während der Förderung der Flüssigkeit nicht selbsttätig entlüftet, da die sich im oberen Bereich des Pumpengehäuses ansammelnden Gasblasen schwerlich über den im unteren Bereich angeschlossenen Druckstutzen mit der Flüssigkeit ausgetragen werden können.

Ein weiterer Vorschlag sieht beispielsweise vor, das Pumpengehäuse derart anzuordnen, daß eine zur Laufradachse senkrecht orientierte Laufradebene waagerecht angeordnet ist, damit der an der üblichen Stelle angeordnete Druckstutzen waagerecht verläuft und somit das Pumpengehäuse in dieser Anordnung über diesen Stutzen vollständig entleert werden kann. Bei einer derartigen Anordnung befindet sich dann ein mehr oder weniger schwerer Antriebsmotor, bezogen auf die Einbaulage des Pumpengehäuses, oberhalb desselben, so daß das Gewicht des Motors auf dem Pumpengehäuse lastet und in vielen Fällen aus Festigkeitsgründen einer besonderen, das Pumpengehäuse von dieser Gewichtskraft freihaltenden Abstützung bedarf. Darüber hinaus ergibt sich das Problem, daß der zwischen Pumpengehäuse und Antriebsmotor angeordnete Abdichtungsbereich der Pumpenwelle nur schwerlich von sich dort ansammelndem Gas befreit werden kann. Es handelt sich bei der Abdichtung in der Regel um eine Gleitringdichtung, in deren Gehäuse das sich dort dann ansammelnde Gas die Dichteigenschaften und das Verschleißverhalten der Dichtung negativ beeinflussen kann.

In den in Frage kommenden Fällen werden oftmals auch Pumpengehäuse eingesetzt, die, bezogen auf ihre Einbaulage, an unterster Stelle in ein Drainagerohr ausmünden, das in einer mehr oder weniger großen Entfernung von der Anschlußstelle am Pumpengehäuse mit einer Absperreinrichtung versehen ist (beispielsweise dargestellt in der Firmendruckschrift "Fristam pumps; Sanitary Centrifugal Pumps", Stamp, Hamburg). Eine derartige Anordnung erlaubt zwar die völlige rückstandsfreie Entleerung des Pumpengehäuses, jedoch bildet das Drainagerohr zwischen seiner Anschlußstelle am Pumpengehäuse und dem Absperrventil einen Totraum, in dem beispielsweise während des Betriebs der Pumpe Produkt stagniert, dessen momentane Zusammensetzung, abhängig von der Art des Produktionsverfahrens und -verlaufs, oftmals nicht der momentanen Produktzusammensetzung des im Pumpengehäuse geförderten Produktes entspricht. Dadurch kann es zur nachteiligen Verschleppung von Produkt aus dem Totraum in das vorbeiströmende Produkt kommen.

Ein weiteres Beispiel für eine derartige unbefriedigende Lösung findet sich in der **EP-A-0 651 160,** in der eine selbstansaugende Seitenkanalpumpe erwähnt wird, die auf einem hygienischen Tank-Lastkraftwagen zum Transport von Milch angeordnet und von einem über das Hydrauliksystem des Lastkraftwagens beaufschlagten Hydromotor angetrieben wird. Diese Pumpe ist am untersten Ende ihres Gehäuses mit einem Ablaßhahn versehen, über den Flüssigkeitsreste im Gehäuse zur Vermeidung von Frostschäden abgeleitet werden können.

Die Erfindung hat sich die Aufgabe gestellt, ein aseptisches Pumpengehäuse mit schaltbarer Drainage zu schaffen, das im Bereich der Drainageableitung sumpfund totraumfrei ausgestaltet ist und rückstandsfrei entleert werden kann.

Diese Aufgabe wird durch die Merkmale des Anspruchs 1 gelöst. Vorteilhafte Ausgestaltungen des aseptischen Pumpengehäuses mit schaltbarer Drainage sind Gegenstand der Unteransprüche.

Durch die Ausbildung einer Sitzfläche am pumpengehäuseseitigen Ende der Drainageöffnung kann letztere unmittelbar an ihrem Eintritt in den Innenraum des Pumpengehäuses mittels eines Schließgliedes verschlossen werden. Eine derartige Anordnung erlaubt einen Verschluß der Drainageöffnung unmittelbar an der inneren Begrenzungsfläche des Pumpengehäuses. Damit wird zum einen die Abdichtung des Schließgliedes in diesem Bereich möglich, zum andern erlaubt es diese Anordnung, das Schließglied bündig und totraumfrei mit der Innenwand des Pumpengehäuses abschließen zu lassen. Dadurch werden bekannte Lösungen entscheidend verbessert, mit denen bislang die Drainageöffnung erst in einem mehr oder weniger großen Abstand stromabwärts von der Innenwandung des Pumpengehäuses verschlossen werden konnte.

Um das Pumpengehäuse rückstandsfrei entleeren zu können, wird die Drainageöffnung vorzugsweise an der tiefsten Stelle im Pumpengehäuse angeordnet, wobei sich die Herstellung der Drainageöffnung und ihrer Sitzfläche dann besonders einfach gestaltet, wie dies weiterhin vorgeschlagen wird, wenn das Schließglied eine zu seiner Sitzfläche senkrecht orientierte Hubbewegung ausführt und dabei in Richtung des Innenraumes des Pumpengehäuses öffnet.

Falls allerdings die Bauhöhe unterhalb des Pumpengehäuses zu minimieren ist, sieht eine weitere Ausgestaltung vor, daß die Wirkungslinie der Hubbewegung einen Winkel gegenüber einer auf der Tangente an das Pumpengehäuse im Bereich seiner tiefsten Stelle stehenden Senkrechten bildet. Bei einer derartigen Ausgestaltung muß allerdings sichergestellt sein, daß die tiefste Stelle des Pumpengehäuses noch wenigstens von einem Teil der Drainageöffnung und ihrer Sitzfläche erfaßt wird.

Eine andere Ausführungsform sieht vor, daß das Schließglied eine zu seiner Sitzfläche orientierte Drehbewegung ausführt. Eine konkrete Ausgestaltung hierfür kann beispielsweise darin bestehen, daß das Schließglied einen Teil der inneren Begrenzungsfläche des Pumpengehäuses darstellt, und nach Vollzug seiner Drehbewegung das Pumpengehäuse an dieser Stelle zur Ablaufleitung hin öffnet.

Um eine einwandfreie Abdichtung des Schließgliedes auf der Sitzfläche zu gewährleisten, sieht eine weitere Ausführungsform vor, daß die Sitzfläche von einer im Pumpengehäuse formschlüssig eingebetteten Sitzdichtung gebildet wird. Es wird in diesem Zusammenhang vorgeschlagen, die Sitzdichtung als Dichtung mit kreisförmigem Querschnitt (O-Ring) auszubilden. Ein O-Ring läßt sich relativ einfach formschlüssig einbetten, und er stellt darüber hinaus eine preiswert zur Verfügung stehende Standarddichtung dar. Diese Lösung findet vorteilhaft insbesondere dann Anwendung, wenn das Schließglied eine zu seiner Sitzfläche senkrecht orientierte Hubbewegung ausführt und dabei in Richtung des Innenraumes des Pumpengehäuses öffnet.

Auf eine separate Sitzdichtung und deren formschlüssige Einbettung kann verzichtet werden, wenn, wie dies eine weitere Ausgestaltung vorsieht, die Sitzfläche aus einem selbstdichtenden Material ausgeführt ist. Eine derartige Lösung ist dann von Vorteil und besonders einfach, wenn das Pumpengehäuse insgesamt aus einem Material ausgeführt ist, das über selbstdichtende Eigenschaften verfügt. Dies ist beispielsweise bei Pumpengehäusen der Fall, die aus Kunststoff hergestellt sind. Des weiteren kann diese Lösung dann vorteilhaft angewendet werden, wenn das Pumpengehäuse mit einem Material ausgekleidet ist, das über derartige selbstdichtende Eigenschaften verfügt.

Eine andere Vereinfachung der Abdichtung der schaltbaren Drainageöffnung ergibt sich, wie dies ebenfalls ein Vorschlag vorsieht, durch eine weitere Ausgestaltung, bei der wenigstens der mit der Sitzfläche zusammenwirkende Teil des Schließgliedes aus einem selbstdichtenden Material ausgeführt ist. Dabei kann das Schließglied insgesamt aus diesem selbstdichtenden Material ausgeführt sein; es ist aber auch möglich, nur den mit der Sitzfläche zusammenwirkenden Teil des Schließgliedes aus selbstdichtendem Material auszuführen oder mit diesem zu armieren.

Um das Schließglied und seine Sitzfläche in vorteilhafter Weise aus dem Pumpengehäuse nach außen ausbauen zu können, ist weiterhin vorgesehen, daß die Sitzdichtung zwischen einer im Pumpengehäuse ausgebildeten Schulter und einem Sitzring, der die Drainageöffnung berandet und von außen nach innen in das Pumpengehäuse eingreift, eingespannt ist. Die Schulter ist dabei derart ausgestaltet, daß sie im Zusammenspiel mit dem auf der Sitzdichtung aufliegenden Schließglied weitestgehend spalt- und damit totraumfrei die Drainageöffnung verschließt.

Das Schließglied wird entsprechend einem weiteren Vorschlag mittels einer Verstellstange betätigt, die von außerhalb des Pumpengehäuses durch die Drainagebohrung hindurchgreift. Dadurch bleibt der Innenraum des Pumpengehäuses von diesbezüglichen Vorkehrungen frei.

Die Verstellstange zur Betätigung des Schließgliedes kann entweder mit einem Handantrieb verbunden werden oder aber mit einem fernsteuerbaren Antrieb, der elektrisch, elektromagnetisch oder mit einem Druckmittel betrieben wird.

Ein Ausführungsbeispiel der Erfindung ist in der Zeichnung dargestellt und wird nachfolgend kurz beschrieben. Es zeigen
- **Figur 1**: einen Querschnitt senkrecht zur Rotationsachse einer Kreiselpumpe durch deren Pumpengehäuse im Bereich einer schaltbaren Drainageöffnung gemäß der Erfindung und
- **Figur 2**: in vergrößerter Darstellung eine Einzelheit im Bereich eines Schließgliedes und seiner zugeordneten Sitzfläche am pumpengehäuseseitigen Ende der Drainageöffnung bei einer Ausführung gemäß Figur 1.

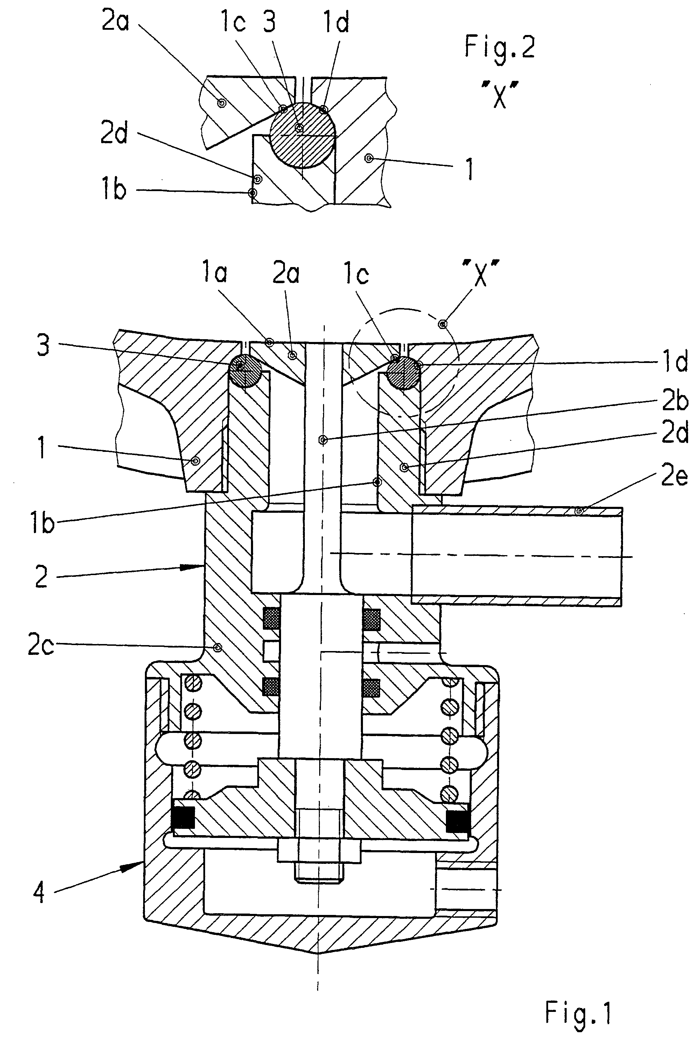

Ein Pumpengehäuse 1 einer Kreiselpumpe (**Figur 1**) ist im vorliegenden Falle beispielsweise als Spiralgehäuse oder schaufelfreier Ringraum ausgebildet. Die Darstellung zeigt lediglich jenen Teil des Pumpengehäuses 1, in dem der Erfindungsgegenstand vorgesehen ist. Bezogen auf die Anordnung der Pumpe (waagerechte Pumpenwelle) mündet eine tiefste Stelle 1a des Pumpengehäuse 1 in eine Drainageöffnung 1b aus, die das Pumpengehäuse 1 durchdringt und die in einem Ventilgehäuse 2c eines Absperrventils 2 seine Fortsetzung findet. Das pumpengehäuseseitige Ende der Drainageöffnung 1b geht in eine Sitzfläche 1c, im vorliegenden Falle gebildet durch eine Sitzdichtung 3, für ein Schließglied 2a des Absperrventils 2 über. Sitzfläche 1c und Schließglied 2a sind dabei derart angeordnet, daß sich das Pumpengehäuse 1 nach Öffnen des Absperrventils 2 rückstandsfrei entleeren kann. Die Stellbewegung des Schließgliedes 2a erfolgt über eine Verstellstange 2b, die nach unten durch das Ventilgehäuse 2c hindurchgeführt ist und in einem unterhalb desselben angeordneten Antrieb 4 endet. Das Ventilgehäuse 2c verfügt über einen seitlich angeordneten Ablaufanschluß 2e, über den die Drainageflüssigkeit aus dem Pumpengehäuse 1 abgeführt werden kann, wenn das Schließglied 2a mittels der Verstellstange 2b in Richtung des Innenraumes des Pumpengehäuses 1 geöffnet wird. Der Ablaufanschluß 2e setzt sich in einer nicht dargestellten Ablaufleitung fort.

Um einen problemlosen Ein- und Ausbau des Schließgliedes 2a und seiner Sitzfläche 1c in das Pumpengehäuse 1 zu gewährleisten, ist zweckmäßigerweise die Sitzfläche 1c für das Schließglied 2a in einem nach unten ausbaubaren Sitzring 2d vorgesehen, der an seinem stirnseitigen, zum Innenraum des Pumpengehäuses 1 weisenden Ende die Sitzdichtung 3 aufnimmt und die Drainageöffnung 1b berandet. Dabei drückt der Sitzring 2d die Sitzdichtung 3 gegen eine am Pumpengehäuse 1 in diesem Bereich ausgebildete Schulter 1d, so daß dadurch eine formschlüssige Einbettung der Sitzdichtung 3 zwischen dem Sitzring 2d und dem Pumpengehäuse 1 mit seiner Schulter 1d gewährleistet ist.

Durch die vorgeschlagene Anordnung ist, wie die Darstellung gemäß **Figur 2** verdeutlicht, eine absolut rückstandsfreie Entleerung des Pumpengehäuse 1 ohne jegliche Totraumbildung in diesem Bereich möglich, wobei darüber hinaus in jedem Falle eine einwandfreie Reinigung der kontaminierten Innenflächen der gesamten Anordnung im Durchfluß sichergestellt ist (CIP-fähige Anordnung).

Die Längsachse des Absperrventils 2, in der dieses öffnet und schließt, kann auch, in einer Ebene senkrecht zur Zeichenebene, unter einem Winkel gegen die Senkrechte in das Pumpengehäuse 1 eintreten. In diesem Falle mündet die ringförmige Sitzfläche 1c etwas seitlich zur vorstehend beschriebenen Lage mit einer entsprechenden Neigung in das Pumpengehäuse 1 ein. Diese Anordnung ist derart zu treffen, daß, bezogen auf die Einbaulage des Pumpengehäuses 1, dessen tiefste Stelle 1a noch von der Drainageöffnung 1b erfaßt wird. Die letztgenannte Ausgestaltung weist eine noch geringere Einbauhöhe auf als die eingangs beschriebene Anordnung.

Die Betätigung der Verstellstange 2b kann manuell oder ferngesteuert, beispielsweise durch einen elektrischen, elektromagnetischen oder einen druckmittelbetriebenen Antrieb 4 erfolgen.

## Patentansprüche

1. Aseptisches Pumpengehäuse mit schaltbarer Drainage, insbesondere für ein Laufrad- oder Spiralgehäuse oder ein einen schaufelfreien Ringraum bildendes Gehäuse (1) einer Kreiselpumpe für die Förderung von Flüssigkeiten unter aseptischen oder wenigstens sanitär einwandfreien Bedingungen, das, bezogen auf die Einbaulage des Pumpengehäuses (1), im Bereich seiner tiefsten Stelle (1a) eine Drainageöffnung (1b) aufweist, die in einer in die Umgebung des Pumpengehäuses (1) geführten Ablaufleitung ihre Fortsetzung findet,
**dadurch gekennzeichnet,**
• **daß** das pumpengehäuseseitige Ende der Drainageöffnung (1b) in eine Sitzfläche (1c) übergeht und
• **daß** ein Schließglied (2a) vorgesehen ist,
• das mit der Sitzfläche (1 c) zusammenwirkt und dabei die Drainageöffnung (1b) verschließt und
• das in seiner Schließstellung bündig und totraumfrei mit der Innenwand des Pumpengehäuses (1) abschließt.

2. Aseptisches Pumpengehäuse nach Anspruch 1, **dadurch gekennzeichnet, daß** das Schließglied (2a) ausgebildet ist, um eine Hubbewegung in Richtung der Normalen zur Innenwandung des Pumpengehäuses (1) im Bereich seiner tiefsten Stelle (1a) auszuführen und in Richtung des Innenraumes des Pumpengehäuses (1) zu öffnen.

3. Aseptisches Pumpengehäuse nach Anspruch 2, **dadurch gekennzeichnet, daß** die Wirkungslinie der Hubbewegung einen Winkel gegenüber der Normalen zur Innenwand des Pumpengehäuses (1) im Bereich seiner tiefsten Stelle (1a) bildet.

4. Aseptisches Pumpengehäuse nach Anspruch 1, **dadurch gekennzeichnet, daß** das Schließglied (2a) eine zu seiner Sitzfläche (1c) orientierte Drehbewegung ausführt.

5. Aseptisches Pumpengehäuse nach einem der Ansprüche 1 bis 4, **dadurch gekennzeichnet, daß** die Sitzfläche (1c) von einer im Pumpengehäuse (1) formschlüssig eingebetteten Sitzdichtung (3) gebildet wird.

6. Aseptisches Pumpengehäuse nach Anspruch 5, **dadurch gekennzeichnet, daß** die Sitzdichtung (3) als Dichtung mit kreisförmigem Querschnitt, ein sogenannter O-Ring, ausgebildet ist.

7. Aseptisches Pumpengehäuse nach Anspruch 5 oder 6, **dadurch gekennzeichnet, daß** die Sitzdichtung (3) zwischen einer im Pumpengehäuse (1) ausgebildeten Schulter (1d) und einem Sitzring (2d), der die Drainageöffnung (1b) berandet und von außen nach innen in das Pumpengehäuse (1) eingreift, eingespannt ist.

8. Aseptisches Pumpengehäuse nach einem der Ansprüche 1 bis 4, **dadurch gekennzeichnet, daß** die Sitzfläche (1c) aus einem selbstdichtenden Material ausgeführt ist.

9. Aseptisches Pumpengehäuse nach einem der Ansprüche 1 bis 4, **dadurch gekennzeichnet, daß** wenigstens der mit der Sitzfläche (1c) zusammenwirkende Teil des Schließgliedes (2a) aus einem selbstdichtenden Material ausgeführt ist.

10. Aseptisches Pumpengehäuse nach einem der Ansprüche 1 bis 9, **dadurch gekennzeichnet, daß** das Schließglied (2a) mittels einer Verstellstange (2b), die von außerhalb des Pumpengehäuses (1) durch die Drainageöffnung (1b) hindurchgreift, betätigt wird.

11. Aseptisches Pumpengehäuse nach Anspruch 10, **dadurch gekennzeichnet, daß** die Verstellstange (2b) mit einem Handantrieb (4) verbunden ist.

12. Aseptisches Pumpengehäuse nach Anspruch 10, **dadurch gekennzeichnet, daß** die Verstellstange (2b) mit einem fernsteuerbaren Antrieb (4) verbunden ist, der elektrisch, elektromagnetisch oder mit einem Druckmittel betrieben wird.

## Claims

1. Aseptic pump housing with switchable drainage, particularly for a blade wheel or spiral housing, or a housing (1) forming a blade-free annular space of a centrifugal pump for conveying liquids under aseptic or at least sanitary unobjectionable conditions, which, in relation to the fitting position of the housing (1), has a drainage opening (1b) in the region of its deepest location (1a), which is continued in a draining-off line guided into the surrounding of the pump housing (1),
**characterised in**
• **that** the end of the drainage opening (1b) on the side of the pump housing merges into a seating surface (1c) and
• **that** a locking member (2a) is provided,
• which co-operates with the seating surface (1c) and locks the drainage opening (1b) by doing this, and
• which in its locking position evenly and without clearance volume fits into the interior wall of the pump housing (1).

2. Aseptic pump housing according to claim 1, **characterised in that** the locking member (2a) is constructed to perform an elevating movement in the direction of the normal line to the interior wall of the pump housing (1) in the region of its deepest location (1a), and to open in direction of the interior space of the pump housing (1).

3. Aseptic pump housing according to claim 2, **characterised in that** the line of application of the elevating movement forms an angle with respect to the normal line to the interior wall of the pump housing (1) in the region of its deepest location (1a).

4. Aseptic pump housing according to claim 1, **characterised in that** the locking member (2a) performs a movement of rotation oriented to its seating surface (1c).

5. Aseptic pump housing according to one of claims 1 to 4, **characterised in that** the seating surface (1c) is formed by a seat seal (3), form-fittingly embedded in the pump housing (1).

6. Aseptic pump housing according to claim 5, **characterised in that** the seat seal (3) is constructed as a seal with annular cross section, a so-called O-ring.

7. Aseptic pump housing according to claim 5 or 6, **characterised in that** the seat seal (3) is clamped between a shoulder (1d) formed in the pump housing (1) and a seat ring (2d), which borders the drainage opening (1b) and locks in from outside to inside into the pump housing (1).

8. Aseptic pump housing according to one of claims 1 to 4, **characterised in that** the seat surface (1c) is realised in a self-sealing material.

9. Aseptic pump housing according to one of claims 1 to 4, **characterised in that** at least the portion of the locking member (2a) co-operating with the seat surface (1c) is realised in a self-sealing material.

10. Aseptic pump housing according to one of claims 1 to 9, **characterised in that** the locking member (2a) is operated by a regulating bar (2b), which grasps from the outside of the pump housing (1) through the drainage opening (1b).

11. Aseptic pump housing according to claim 10, **characterised in that** the regulating bar (2b) is connected with a hand drive (4).

12. Aseptic pump housing according to claim 10, **characterised in that** the regulating bar (2b) is connected with a remote-controllable drive (4), which is operated electrically, electromagnetically or by a pressurising medium.

## Revendications

1. Carter de . pompe aseptique à drainage commutable, en particulier pour un carter de rotor ou une volute de pompe ou un carter (1) formant un espace circulaire sans aubes d'une pompe centrifuge pour le transport de liquides dans des conditions aseptiques ou au moins irréprochables du point de vue sanitaire, qui présente, dans la zone de son point le plus bas (1a) rapporté à la position de montage du carter de pompe (1), un orifice de drainage (1b) se prolongeant dans une tuyauterie d'évacuation partant dans l'entourage du carter de pompe (1), **caractérisé en ce que** l'extrémité de l'orifice de drainage (1b), côté carter de pompe, passe à une surface d'appui (1c) et qu'il est prévu un organe de fermeture (2a) qui coopère avec la surface d'appui (1c) pour fermer l'orifice de drainage (1b) et qui, dans sa position de fermeture, ferme sans zone morte et à fleur de la paroi intérieure du carter de pompe (1).

2. Carter de pompe aseptique selon la revendication 1, **caractérisé en ce que** l'organe de fermeture (2a) est conçu pour exécuter un mouvement de levage dans une direction perpendiculaire à la paroi intérieure du carter de pompe (1), dans la zone de son point le plus bas (1a), et pour ouvrir dans la direction de l'espace intérieur du carter de pompe (1).

3. Carter de pompe aseptique selon la revendication 2, **caractérisé en ce que** la ligne d'action du mouvement de levage forme un angle par rapport à la perpendiculaire à la paroi intérieure du carter de pompe (1) dans la zone de son point le plus bas (1a).

4. Carter de pompe aseptique selon la revendication 1, **caractérisé en ce que** l'organe de fermeture (2a) exécute un mouvement de rotation orienté vers sa surface d'appui (1c).

5. Carter de pompe aseptique selon l'une quelconque des revendications 1 à 4, **caractérisé en ce que** la surface d'appui (1c) est formée par un joint d'appui (3) logé de manière solidaire avec correspondance de forme dans le carter de pompe (1).

6. Carter de pompe selon la revendication 5, **caractérisé en ce que** le joint d'appui (3) est formé comme un joint de section circulaire appelé joint torique.

7. Carter de pompe aseptique selon la revendication 5 où 6, **caractérisé en ce que** le joint d'appui (3) est serré entre une épaule (1d) formée dans le carter de pompe (1) et une bague d'appui (2d) qui borde l'orifice de drainage (1b) et s'insère de l'extérieur vers l'intérieur dans le carter de pompe (1).

8. Carter de pompe selon l'une quelconque des revendications 1 à 4, **caractérisé en ce que** la surface d'appui (1c) est réalisée dans un matériau auto-étanchéifiant.

9. Carter de pompe aseptique selon l'une quelconque des revendications 1 à 4, **caractérisé en ce qu'**au moins la partie de l'organe de fermeture (2a) coopérant avec la surface d'appui (1c) est réalisée dans un matériau auto-étanchéifiant.

10. Carter de pompe selon l'une quelconque des revendications 1 à 9, **caractérisé en ce que** l'organe de fermeture (2a) est actionné au moyen d'une tige de réglage (2b) qui, venant de l'extérieur du carter de pompe (1), passe par l'orifice de drainage (1b).

11. Carter de pompe selon la revendication 10, **caractérisé en ce que** la tige de réglage (2b) est reliée à une commande manuelle (4).

12. Carter de pompez selon la revendication 10, **caractérisé en ce que** la tige de réglage (2b) est reliée à un entraînement pouvant être télécommandé (4) qui fonctionne électriquement, électromagnétiquement ou par un moyen sous pression.
